Europäisches Patentamt

European Patent Office

Office européen des brevets

(11) Publication number: **0 393 914**
**A1**

# EUROPEAN PATENT APPLICATION

(21) Application number: 90303867.7

(22) Date of filing: **10.04.90**

(51) Int. Cl.⁵: **H02J 13/00, G08C 19/28**

(30) Priority: **15.04.89 GB 8908605**

(43) Date of publication of application:
**24.10.90 Bulletin 90/43**

(84) Designated Contracting States:
**AT BE CH DE DK ES FR GB GR IT LI LU NL SE**

(71) Applicant: **THORN EMI plc**
**4 Tenterden Street**
**London W1A 2AY(GB)**

(72) Inventor: **Weston, Clive Richard**
**37, The Green, West Drayton**
**Middlesex, UN7 7PW(GB)**

(74) Representative: **Hurst, Richard Arthur**
**Alexander et al**
**THORN EMI Patents Limited The Quadrangle**
**Westmount Centre Uxbridge Road**
**Hayes Middlesex UB4 0HB(GB)**

(54) **Communication systems.**

(57) A communication system for operating remote
electrical appliances includes a first memory to iden-
tify the appliance and a key with a second memory
including an identification address. A microprocessor
within the appliance reads the second memory and
may update the first so that the appliance will only
function when the key is inserted in the appliance.

FIG 1.

# COMMUNICATION SYSTEMS

This invention relates to communication systems. In particular the invention relates to communication systems for operating electrical appliances situated at remote locations. It is intended that such systems will be used, for example in a domestic premises to address electrical appliances such as washing machines from a remote location using data messages which are transmitted for example via the mains or via radio transmission. Such systems suffer the problem however that the transmission range of the messages transmitted to the appliances is very difficult to predict. There is thus a need to avoid interference between the communication systems operated by different users. Whilst in radio communication systems this problem can be avoided by placing different users on different frequencies, in mainsborne communication systems there are fewer frequencies available. In any event the use of a single frequency band is attractive as it will reduce the cost of receivers and transmitters. In mainsborne communication systems it has been proposed to use mains line filters to limit the propagation messages to a single user. Such mains line filters are however expensive and furthermore cannot guarantee to be completely successful in removing unwanted transmissions.

It is an object of the present invention to provide a communication system enabling different users in the same frequency band but where this problem of interference can be alleviated.

According to a first aspect of the present invention a communication system for operating remote electrical appliances includes: first non volatile memory means associated with each electrical appliance to be operated by the system, each first memory means including an address which identifies the type of appliance with which it is associated; a key means including a second non-volatile memory means including a system identification address which identifies the system, and updating means for recording within the second memory means how many of each type of electrical appliance are associated with the system, the key means also including means arranged to co-operate with each first memory means to program the system identification address in each first memory means together with an identification code which identifies the serial number of the appliance within the series of appliances of the same type, the system in use being such that it will only accept data messages which include an address which identifies the system and the particular appliance.

According to a second aspect of the present invention a key means for use in a communication system for operating electrical appliances comprises a non-volatile memory means including a system identification address which identifies the system, updating means for recording within the non-volatile memory how many of each type of electrical appliance are associated with the system and means arranged to co-operate with memory means within each appliance to be operated by the system so as to program the system identification address in each appliance memory means together with an identification code which identifies the serial number of the appliance within the series of appliances of the same type.

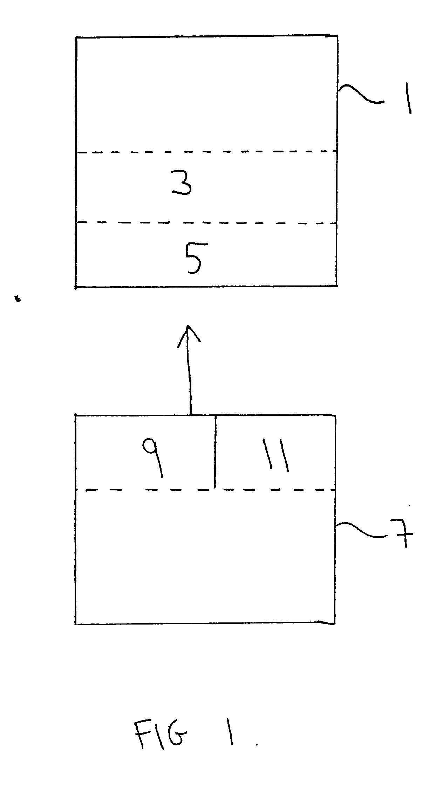

One particular communication system in accordance with the invention together with a key for use in such a system will now be described by way of example only, with reference to the following drawing, Figure 1.

The system to be described is a mainsborne communication system for use within a domestic premises. Each electrical appliance 1 to be used within the system, such as a washing machine, television etc. has incorporated within it a microprocessor 3 incorporating non-volatile memory 5. This will generally be incorporated within the appliance 1 during manufacture of the appliance 1, the memory 5 being programmed with a functional address corresponding to the type of appliance 1. Each domestic premises is provided with a key 7 incorporating a non-volatile memory having two areas of storage. The first of these areas 9 is preprogrammed with an address which uniquely identifies the premises. The second area 11 is an updatable area for recording how many of each type of appliance are located on the premises.

When a new appliance 1 is first installed in the premises its use within the mainsborne communication system is inhibited until the key 7 is inserted into the appliance 1. The microprocessor 3 within the appliance interacts with the memory 9 in the key so as to update the key's 7 record of how many appliances of that particular type are located on the premises. The microprocessor 3 is then effective to read the identification code which identifies the premises from the key 7 into the memory of the appliance 5, and also to allocate to the appliance a serial number within the series of appliances of that particular type so as to individually identify the appliance, for example television number 3.

It is considered that the use of between 24 to 32 bits to program the address for the domestic premises will ensure uniqueness. This then allows between 17 and 4300 million different addresses. Assuming that there are 256 different appliance types, identification of the appliance type would require eight bits. Sixteen possible appliances of any given type would require a further four bits. Thus in this particular example the total functional address which identifies the particular appliance would need to be 12 bits in length. A digital address forming part of each message transmitted by the system which identifies both the transmitter and receiver of the message will then need to be between 48 and 56 bits in length.

It will be appreciated that by using a system in accordance with the invention it is not necessary to program an address which uniquely identifies both the particular apparatus and the domestic premises' address during the production of the apparatus. Very limited intervention by the user is required, however. There is for example no setting of switches required. The appliances will generally be programmed to refuse to function until the key has been inserted, and subsequently removed.

It will also be appreciated that the programming of the address identifying the domestic premises into each appliance provides a security feature. Appliances subsequently removed from the premises by an unauthorised person such as a burglar will not operate by means of a communication system in a different premises.

It will also be appreciated that whilst the particular communication system described herebefore is for a domestic premises the invention also finds application in communication systems in other situations, for example in factories.

It will also be appreciated that whilst the particular communication system described herebefore is a mainsborne communication system, other forms of communication systems in accordance with the invention are possible, for example radio communication systems.

## Claims

1. A communication system for operating remote electrical appliances includes:
first non volatile memory means associated with each electrical appliance to be operated by the system, each first memory means including an address which identifies the type of appliance with which it is associated; a key means including a second non-volatile memory means including a system identification address which identifies the system, and updating means for recording within the second memory means how many of each type of electrical appliance are associated with the system, the key means also including means arranged to co-operate with each first memory means to program the system identification address in each first memory means together with an identification code which identifies the serial number of the appliance within the series of appliances of the same type, the system in use being such that it will only accept data messages which include an address which identifies the system and the particular appliance.

2. A communication system according to claim 1, wherein the updating means is a microprocessor.

3. A communication system according to claim 1 or claim 2 wherein the microprocessor is futher effective to read the identification code from the key.

4. A communication system according to any preceding claim wherein operation of the system is inhibited until the key is inserted into the appliance.

5. A key means for use in a communications system for operating electrical appliances comprises a non-volatile memory means including a system identification address which identifies the system, updating means for recording within the non-volatile memory how many of each type of electrical appliance are associated with the system and means arranged to co-operate with memory means within each appliance to be operated by the system so as to program the system identification address in each appliance memory means together with an identification code which identifies the serial number of the appliance within the series of appliances of the same type.

6. A key means according to claim 5 wherein the non-volatile memory means has two areas of storage; a first pre-programmed area; and a second updatable area.

7. A key means according to claim 6 wherein the means for co-operation is a microprocessor.

8. A communication system according to claim 1 for use as a mainsborne communication system.

9. A key means according to claim 5 for use in a mainsborne communication system.

FIG 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-2800472 (PICO ELECTRONICS LTD)<br>* page 10, lines 7 - 29 *<br>* page 11, lines 13 - 21 *<br>* page 15, line 20 - page 17, line 1; figures 1, 2 * | 1, 5, 8, 9 | H02J13/00<br>G08C19/28 |
| A | DE-A-3141200 (MISAWA HOMES K.K.)<br>* page 6, line 4 - page 7, line 3 *<br>* page 13, line 18 - page 14, line 6; figure * | 1, 5, 8, 9 | |
| A | EP-A-0092750 (SIEMENS AKTIENGESELLSCHAFT)<br>* page 2, line 11 - page 3, line 9 *<br>* page 6, line 15 - page 7, line 4 *<br>* page 13, lines 1 - 30; figure 1 * | 1, 5, 8, 9 | |
| A | US-A-4808841 (IKO ET AL)<br>* the whole document * | 1, 8 | |
| | | | TECHNICAL FIELDS SEARCHED (Int. Cl.5 )<br><br>H02J<br>G08C |

The present search report has been drawn up for all claims

| Place of search | Date of completion of the search | Examiner |
|---|---|---|
| THE HAGUE | 15 JUNE 1990 | WANZEELE R.J. |